# EUROPEAN PATENT SPECIFICATION

(11) **EP 3 259 950 B1**
(45) Date of publication and mention of the grant of the patent: **18.09.2019**
(21) Application number: 15709781.7
(22) Date of filing: 20.02.2015
(51) Int. Cl.: H04W 74/08, H04W 16/14, H04W 72/12

(54) **LBT PATTERNS FOR WIRELESS COMMUNICATION**
LBT-MUSTER ZUR DRAHTLOSEN KOMMUNIKATION
DIAGRAMMES LBT POUR COMMUNICATION SANS FIL

(43) Date of publication of application: 27.12.2017
(73) Proprietor: Telefonaktiebolaget LM Ericsson (publ), 164 83 Stockholm (SE)
(72) Inventor: KOUTSIMANIS, Chrysostomos, 112 19 Stockholm (SE); GODANA, Bruhtesfa, 4020 Stavanger (NO); KAZMI, Muhammad, 167 39 Bromma (SE)
(74) Representative: Zacco Sweden AB
(86) International application number: PCT/SE2015/050199
(87) International publication number: WO 2016/133441

(56) References cited:
- WO-A1-2013/086659
- WO-A2-2013/112983
- US-A1- 2015 043 523
- US-A1- 2015 049 715
- INTERDIGITAL COMMUNICATIONS: "On design targets and supported functionality for LTE LAA", 3GPP DRAFT; R1-144219, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 27 September 2014 (2014-09-27), XP050869853, Retrieved from the Internet: URL:http://www.3gpp.org/ftp/tsg_ran/WG1_RL 1/TSGR1_78b/Docs/ [retrieved on 2014-09-27]
- ERICSSON: "Discussion on LBT for LAA UL Transmissions", 3GPP DRAFT; R1-150587, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933795, Retrieved from the Internet: URL:http://www.3gpp.org/ftp/Meetings_3GPP_ SYNC/RAN1/Docs/ [retrieved on 2015-02-08]

## Description

### Technical Field

The concepts described herein pertain to the use of at least one frequency band or spectrum accessed after listening to the spectrum, like an unlicensed spectrum, for wireless communication, in particular in the context of wireless communication involving licensed spectra.

### Background

In cellular communication, e.g. mobile communication or telephony, there are often used licensed frequency spectra, which are often regulated by governments or government bodies. Access to the spectra may be controlled and/or scheduled by a network, in particular via base stations, e.g. eNodeBs in the context of LTE/E-UTRA.

There are also unlicensed spectra, which are not or less regulated and which may require different access procedures than licensed spectra. For example, a Carrier Sense Multiple Access (CSMA) protocol for frame based wireless access technologies may be used. In CSMA protocols, the access to the wireless medium or spectrum/spectra is achieved by sensing the energy of it, e.g. the energy or energy density of radiation in the spectrum at the location of the sensing entity, which generally may be a wireless device. If the sensed energy is low (e.g., as compared to a given threshold), the channel is considered to be available for data transmissions by the sensing entity and may be used for transmission. This approach may generally be called as Listen-Before-Talk (LBT), and may be adapted to or in different protocols. LBT is used in WiFi systems and recently has been considered as a candidate Medium Access (MAC) technology for LTE systems deployed in unlicensed spectra. Such flavors of LTE are known as LTE-Unlicensed (LTE-U) or License Assisted-LTE (LA-LTE).

Various LBT-schemes are disclosed in:
- WO 2013/112983 A2,
- US 2015/043523 A1,
- US 2015/049715 A1,
- WO 2013/086659 A1,
- InterDigital Communications: "On design targets and supported functionality for LTE LAA", R1-144219, 3GPP TSG RAN WG1 meeting #78bis, October 2014, and
- Ericsson: "Discussion on LBT for LAA UL transmissions", R1-150587, 3GPP TSG RAN WG1 meeting #80, February 2015.

### Summary

The present invention is defined in the appended independent claims.

An object of the present invention is to provide a flexible approach for utilizing spectra requiring LBT.

There is suggested a method of operating a wireless device in a wireless communication network, wherein the wireless device is adapted to transmit data based on pre-determined communication schedules, each communication schedule pertaining to a scheduling time interval of predetermined length. The method comprises determining, by the wireless device, a pattern of expected transmission accesses on at least a first transmission frequency spectrum accessed with Listen-Before-Talk (LBT), the pattern covering a plurality of scheduling time intervals.

There is also described a wireless device for a wireless communication network, the wireless device being adapted to transmit data based on pre-determined communication schedules, each communication schedule pertaining to a scheduling time interval. The wireless device is further being adapted to determine a pattern of expected transmission accesses on at least a first transmission frequency spectrum accessed with Listen-Before-Talk, the pattern covering a plurality of scheduling time intervals.

Moreover, there is proposed a method of operating a network node of a wireless communication network, wherein the network node is adapted to provide communication schedules to one or more wireless devices, each communication schedule pertaining to a scheduling time interval of predetermined length. The method comprises determining, by the network node, a pattern of expected transmission accesses on at least a first transmission frequency spectrum accessed with Listen-Before-Talk (LBT), the pattern covering a plurality of scheduling time intervals.

A network node for a wireless communication network is also suggested, the network node being adapted to provide communication schedules to one or more wireless devices, each communication schedule pertaining to a scheduling time interval of pre-determined length, The network node is further adapted to determine a pattern of expected transmission accesses on at least a first transmission frequency spectrum accessed with Listen-Before-Talk, the pattern covering a plurality of scheduling time intervals.

Moreover, there is described a method of operating a wireless communication network, wherein the network is adapted to provide communication schedules to one or more wireless devices, each communication schedule pertaining to a scheduling time interval of pre-determined length. The method comprises determining, by the network, a pattern of expected transmission accesses on at least a first transmission frequency spectrum accessed with Listen-Before-Talk (LBT), the pattern covering a plurality of scheduling time intervals.

In addition, a wireless communication network is suggested, the network being adapted to provide communication schedules to one or more wireless devices, each communication schedule pertaining to a scheduling time interval of pre-determined length. The network is further adapted to determine a pattern of expected transmission accesses on at least a first transmission frequency spectrum accessed with Listen-Before-Talk, the pattern covering a plurality of scheduling time intervals.

Also described is a computer program product comprising code executable by control circuitry, the code causing the control circuitry to carry out and/or control any of the methods described herein when executed by control circuitry.

There is also described a storage medium storing a computer program product according as described herein and/or storing code executable by control circuitry, the code causing the control circuitry to carry out and/or control any of the methods described herein when executed by control circuitry.

Accordingly, LBT access may be based on a scheduling time interval, which may lead to imprinting the time structure defining the scheduling time interval onto the first transmission interval. Moreover, there is provided a flexible and dynamic pattern facilitating operation on the first transmission frequency spectrum.

### Brief description of the drawings

In the drawings, examples of concepts and methods pertaining to LBT in wireless communication are introduced for illustrative purposes.
Fig. 1 shows a first approach for LBT in a LTE subframe structure.
Fig. 2 shows a second approach for LBT in a LTE subframe structure.
Fig. 3 shows a third approach for LBT in a LTE subframe structure.
Fig. 4 shows a further approach for LBT.
Fig. 5 shows a combination of two LBT patterns.
Fig. 6 shows an example for a wireless device.
Fig. 7 shows an example for a network node.
Fig. 8a, 8b and 8c show examples of methods pertaining to LBT.
Fig. 9a, 9b and 9c show examples of devices utilizing LBT.

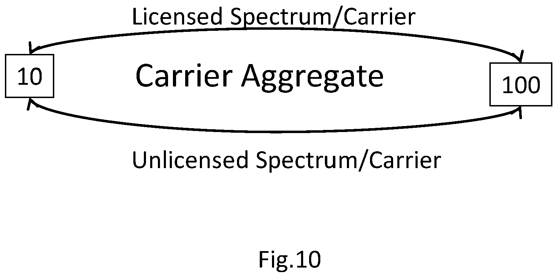

Fig. 10 shows a setup with carrier aggregation of a licensed carrier and an unlicensed carrier.

### Detailed description

In the context of this specification, a frequency spectrum or spectrum may refer to a frequency band or to a combination of frequency bands, which may comprise one or more than one carriers or carrier frequencies, each of which may comprise a frequency band itself. A frequency band may have a frequency bandwidth, which generally may be variable or fixed. Different bands may have different (and/or variable) frequency bandwidths. A carrier or carrier frequency and/or band may refer to electromagnetic radiation having the frequency and/or in the band. A carrier may be utilized for transmission and/or information transport and may carry information and/or signals and/or data. A carrier may be utilized in uplink (UL) or downlink (DL) or both. Uplink may generally refer to data transmission from a wireless device to a network or network node, and/or to a higher network layer. Downlink may generally refer to data transmission from a network or network node to a wireless device, and/or to a lower network layer.

A channel may generally be a communication channel, which may be implemented on and/or comprise one or more spectra or carriers.

A wireless device may generally be a user equipment and/or mobile terminal, e.g. according and/or analogously to LTE, which may be adapted for wireless communication with a wireless communication network.

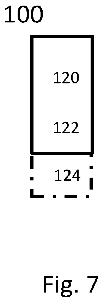

As indicated in Fig. 7, a wireless device 100 may generally comprise control circuitry 120 adapted for controlling and/or operating the wireless device. In addition, the wireless device 100 may comprise radio circuitry 122, adapted for transmitting and/or receiving in or to a wireless communication network, in particular to another wireless device or a network node. Radio circuitry may comprise receiver circuitry and/or transmitter circuitry and/or transceiver circuitry, which may comprise for example sensors and/or amplifiers and/or processors and/or other components. Optionally, a wireless device 100 may comprise and/or be connected or connectable to antenna circuitry 124, which may comprise e.g. an antenna arrangement with one or more antenna elements, e.g. in a MIMO (multiple-input-multiple-output)-arrangement. Radio circuitry 122 and antenna circuitry 124 (as well as control circuitry 120) may be connected or connectable to operate the wireless device such that it may communicate (transmit/receive) with and/or in a wireless communication network, e.g. according to a given standard, in particular LTE. A wireless device and/or its circuitry 120, 122 and/or 124, may in particular be adapted to transmit at least on one carrier/channel/spectrum, which may be or correspond to a first transmission spectrum for the wireless device. The first transmission spectrum may be a spectrum requiring and/or utilised with Listen-Before-Talk. The wireless device and/or its circuitry 120, 122 and/or 124, may be adapted to transmit at least on one carrier/channel/spectrum, which may be or correspond to a second transmission spectrum for the wireless device. The second transmission spectrum may be a spectrum accessed and/or utilised with a predetermined time structure and/or a predetermined scheduling time interval and/or may be a licensed spectrum and/or a spectrum or carrier utilized for transmitting control information, e.g. via and/or implementing an uplink control channel. It may be considered that the second transmission spectrum does not require LBT and/or is accessed according to a communication schedule provided by a network and/or network node, e.g. without LBT. Generally, the first transmission spectrum and the second transmission spectrum may be combined or configured (e.g. by the network and/or network node) to a carrier aggregate.

A network node may be a node for and/or of a wireless communication network. The network node may be a radio node and/or adapted for communication with one or more wireless devices. In particular a network node may be adapted to control and/or configure one or more wireless devices and/or their operation, e.g. communication, which may comprise wireless transmission and/or reception of data. The network node may be adapted to provide communication schedules scheduling one or more wireless device for transmission and/or reception.

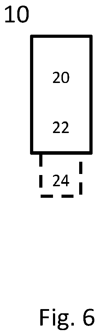

As indicated in Fig. 6, a network node 10 may generally comprise control circuitry 20 adapted for controlling and/or operating the network device and/or one or more wireless device, e.g. by configuring and/or scheduling them. The network node 10 may comprise radio circuitry 22, adapted for transmitting and/or receiving in or to a wireless communication network and/or with one or more than one wireless devices. Radio circuitry may comprise receiver circuitry and/or transmitter circuitry and/or transceiver circuitry, which may comprise for example sensors and/or amplifiers and/or processors and/or other components. Optionally, a wireless device 10 may comprise and/or be connected or connectable to antenna circuitry 24, which may comprise e.g. an antenna arrangement with one or more antenna elements, e.g. in a MIMO (multiple-input-multiple-output)-arrangement. Radio circuitry 22 and antenna circuitry 24 (as well as control circuitry 20) may be connected or connectable to operate the network node 10 such that it may communicate (transmit/receive) with and/or in a wireless communication network and/or wireless devices, e.g. according to a given standard, in particular LTE.

A network node and/or its circuitries 20, 22 and/or 24 may in particular be adapted to transmit at least on one carrier/channel/spectrum, which may be or correspond to a first transmission spectrum for the network node.

The first transmission spectrum may be a spectrum requiring and/or utilised with Listen-Before-Talk. The network node 10 and/or its circuitries 20, 22 and/or 24, may be adapted to transmit at least on one carrier/channel/spectrum, which may be or correspond to a second transmission spectrum for the network node. The second transmission spectrum may be a spectrum accessed and/or utilised with a predetermined time structure and/or a predetermined scheduling time interval and/or may be a licensed spectrum and/or a spectrum or carrier utilized for transmitting control information, e.g. via and/or implementing a downlink control channel. It may be considered that the second transmission spectrum does not require LBT and/or is accessed according to a communication schedule provided by a network and/or network node (which may be the network node or a different one), e.g. without LBT. Generally, the first transmission spectrum and the second transmission spectrum may be combined or configured (e.g. by the network and/or network node) to a carrier aggregate and/or the network node may be configured correspondingly. The network node may be connected or connectable to other network node or components, in particular to higher-level components and/or a core network.

A network or network node may be adapted to configure a carrier aggregate, e.g. for a wireless device and/or one or more cells. This may include configuring the wireless device for utilizing the carrier aggregate (the wireless device may be adapted to be configured for such and/or comprise such functionality).

Listening to and/or on a carrier or spectrum may comprise determining and/or sensing and/or detecting and/or measuring a parameter indicating usability and/or availability of the carrier or spectrum listened to, e.g. the energy or energy density of transmission on this carrier or spectrum.

Listening may be performed over a listening time interval, which may be a given and/or pre-defined and/or configured or configurable time interval. Listening may comprise sensing and/or detecting signals and/or energy and/or transmissions on the carrier and/or spectrum. Generally, listening may pertain to the location of the listening device or node. A listening node may be any wireless device or network node adapted for and/or performing such listening. A listening node (e.g. wireless device or network node) may comprise a listening module for listening. A LBT procedure may comprise listening. Generally, the LBT procedure may comprise listening and determining whether the channel/spectrum/carrier listened to or on is available for transmission, and/or transmitting data based on whether data for transmission is available and on the result of the listening, e.g. whether transmission is allowed and/or the channel/spectrum/carrier is available for transmission. This may comprise comparing the parameter, e.g. energy and/or energy density, with a threshold, which may be pre-defined and/or be according to regulations. Listening on a spectrum/channel/carrier and determining whether it is available for transmission may also be referred to as LBT trial, which may be considered successful if availability for transmission is determined (and/or transmission of data is performed) and unsuccessful otherwise.

A CSMA protocol may be a probabilistic MAC (Medium Access Control) protocol based on a LBT procedure, wherein access to a channel or frequency spectrum is achieved by first sensing the channel or frequency spectrum and then transmitting if the channel or frequency spectrum was found to be free. The sensing of a spectrum or channel may be realized by and/or comprise measuring the energy of the channel over a certain period of time, or, in other words, listening to the channel or spectrum. If the measured energy is found to be below a predetermined threshold, then the spectrum or channel may be considered to be free and/or available for transmission.

It may be sensed or detected that there is no other ongoing data transmission on the spectrum or channel, thus it may be determined that the channel or spectrum is not used by another nearby node and/or usable or available for transmission by the listening node. In that case, the listening node that listened to the spectrum or channel may occupy it and use it for data transmission. In the opposite case, where the measured energy is above the predetermined threshold, the spectrum or channel may be considered to be busy and the listening node is not permitted to occupy the spectrum or channel. Instead, the node may wait (defer) until the channel or spectrum becomes available again, e.g. until the other node occupying the spectrum or channel stops transmitting. Typically, a random back-off time or counter may be employed and the listening node will measure the channel or spectrum until this counter expires or the time passes. If the channel or spectrum is found (e.g., sensed) to be free (e.g., the energy on the spectrum is lower than a threshold) during this time period, then the listening node can access it. The random back-off concept may be implemented as a contention mechanism which allows multiple users to measure the channel for different time periods and avoid systematic collisions. The CSMA protocol described above is also known as a version of Listen-Before-Talk (LBT), which means that every node which wants to access the spectrum or channel for transmitting data must first listen if the spectrum or channel is available or not.

CSMA protocols and various flavors of it are broadly used in WiFi systems. WiFi nodes are deployed in unlicensed spectrum bands and in an unplanned way. Hence, a WiFi node must share the channel in an equal way with another neighbor WiFi node. Moreover, a WiFi node must coexist with any other wireless system that is also deployed in the same spectrum band. For example, in some cases WiFi uses frequencies that are also used in radar systems. CSMA or LBT is a MAC protocol that enables WiFi-WiFi and WiFi-other wireless systems to coexist and is intended to ensure a reasonably fair share of the channel for all contending nodes. LBT in WiFi systems is a non-frame based mechanism meaning that a WiFi node can listen to the channel and start transmitting data practically at any time instant.

A communication schedule may comprise allocation data scheduling a wireless device and/or network node for communication, in particular for transmission. The communication schedule may be considered to pertain to a scheduling time interval if it defines and/or schedules the device or node over and/or for the scheduling time interval (e.g., not longer than the scheduling time interval). Scheduling may including not allowing the device or node to transmit during the scheduling time interval or during parts of the interval. The scheduling time interval may in particular be a subframe according to LTE. A scheduling time interval may be divided in different sub-intervals, e.g. according to a given standard like LTE. A pre-determined communication schedule may be pre-determined by a network and/or network node. Pre-determined may refer to the schedule being determined before the time interval scheduled.

A transmission access may comprise a LBT procedure and/or transmitting on a carrier and/or spectrum requiring LBT (in particular, transmitting after performing LBT). A transmission access may pertain to a given combination of LBT with transmission of data, e.g. in a subframe comprising a first interval and a second interval as described herein.

It may be considered that the subframe is time-divided such that the interval in which LBT is performed is earlier in time than the interval data transmission is performed.

A pattern of expected transmission accesses may comprise information indicating at which scheduling time intervals a transmission access is to be expected. A pattern covering a plurality of scheduling time intervals may cover a combination of scheduling time intervals, which may be continuous and/or in direct sequence.

Covering a plurality of scheduling time intervals may comprise and/or refer to covering an integer number of scheduling time intervals and/or being defined over a duration or time consisting of an integer number of scheduling time intervals. The pattern may indicate expected transmission access on the level of the scheduling time interval (e.g. subframe) and/or a sub-division, e.g. a slot.

A frequency spectrum accessed with LBT may be a spectrum which requires an LBT procedure before it may be transmitted on and/or for which such is performed.

Recently, a great interest in deploying LTE on unlicensed bands has been demonstrated. The data traffic explosion as well as the comfort of operating a single Radio Access Network (RAN) has driven many operators and telecom vendors in the concept of expanding LTE to unlicensed bands and unlock the vast amount of the available spectrum there. One approach builds upon carrier aggregation (CA) where a licensed based LTE carrier is aggregated with an unlicensed LTE carrier. Thus the crucial control signaling may go through the licensed component carrier (CC) and the unlicensed CC (or secondary CC, SCC) is used only as data rate booster. The above concept is known as License-Assisted LTE (LA-LTE) or LTE-Unlicensed (LTE-U). In the first phase of LA-LTE, the unlicensed SCC (SCC-U) may be used only for carrying DL data traffic. Nevertheless, the case of using the SCC-U for UL will also be considered at a later stage.

LA-LTE must coexist and share the channel in a fair manner with other systems deployed also on the same frequency bands, such as WiFi, radar systems, etc. CSMA or LBT is an interesting approach that can be adopted by LA-LTE systems and provide fair share of the channel. Nevertheless, LBT cannot be re-used as it is in the LTE framework.

LBT in WiFi for example is asynchronous and not frame based, on the other hand LTE uses a frame based MAC, wherein transmissions are scheduled from a central entity (e.g., LTE scheduler and/or eNodeB) and occur at specific time instances, such as at the beginning of each radio subframe (or TTI) with duration of 1 msec. Several schemes on fitting LBT in the LTE time structure are presented.

In one variant, LBT is performed periodically with a period equal to one TTI. Generally (and generally independent of the scheme or pattern used for LBT), the duration of listening in LBT (listening time interval) is typically in the order of tens to hundreds of µsec. It may be considered to adapt listening with a variable listening time duration, e.g. in order to avoid systematic collisions. The listening time duration or interval may correspond and/or may be adapted to a fraction or up to few LTE OFDM symbols (or the corresponding duration), wherein each LTE OFDM symbol has a duration of 71 µsec.

It may be considered that each LTE subframe may be time divided into two parts (e.g. a first time interval and a second time interval), wherein the first one may carry data and in the second one listening may take place and/or be performed. In some examples, the listening may be performed at the end of the (current) subframe (the second time interval may be arranged after the first time interval in time) and may determine whether or not data transmission will continue (or be commenced) in the next subframe.

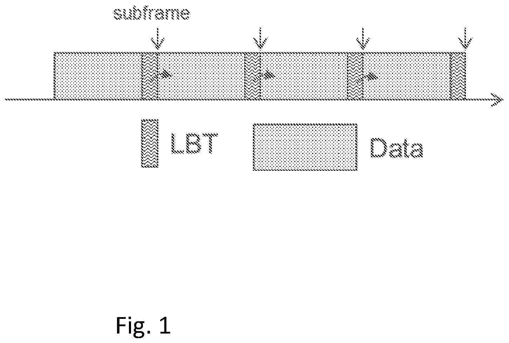

Hence, the data transmission in a subframe K may be determined by the outcome of listening during the end of subframe K-1. Fig.1 shows a schematic diagram of a proposed method. Alternatively, the second interval (used for listening) may be arranged before the first interval, such that in a subframe it is first listened, then data may be transmitted.

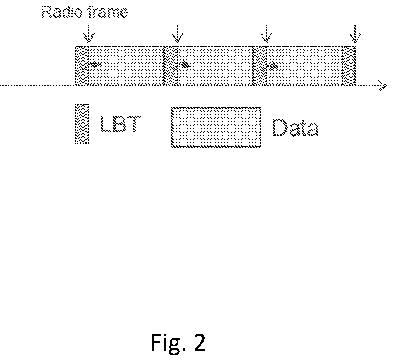

In another alternative, LBT may be performed at the beginning of each LTE radio frame (e.g. in the first subframe, which may be structured as described above). Hence, in this variant, listening is performed periodically with a period of 10 msec. If the channel is sensed to be free, then the node occupies the channel for the next 10 msec. By using longer listening or LBT period, better utilization of the channel is obtained at the expense of less flexibility. Fig.2 shows a schematic diagram of this method.

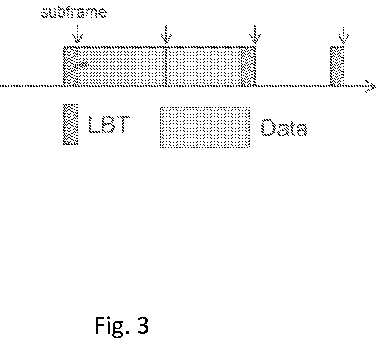

In both aforementioned alternatives, LBT is synchronous in the sense that it occurs periodically with a fixed time period. More asynchronous LBT schemes may also be considered. In one variant, LBT is not performed when a node has accessed the channel until it transmits an amount of data. The amount of consecutively used subframes for data transmission can be fixed, or determined by the buffer status or up to a maximum number. Fig.3 shows an example of this version. In this example, the node senses that the channel is free and it occupies it for two consecutive subframes. After that period, the node performs listening again and in the specific example it senses the medium occupied so it waits until the end of next subframe to sense the channel again.

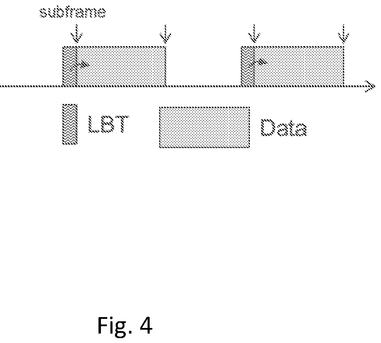

In another alternative, the LBT period (period between two performed LBT procedures) is adaptive based on the actual data transmissions. Once a node occupies the channel, it may skip listening (and/or transmitting) at the end of the transmission in order to ensure that other systems will have the opportunity to access the channel. This method has been proven to be particularly useful in the case of unsynchronized LA-LTE networks deployed in the same geographical area. Fig.4 shows an example of this alternative.

In the aforementioned LBT methods, listening or LBT is configured either statically or based on the own cell transmissions.

In the first two cases, LBT is performed every X msec, where X can be equal to 1 or 10. In the third case, LBT occurs always at the end of data transmission where the data transmission duration can be fixed or capped by a maximum allowed number. In the fourth case, LBT is always skipped at the end of the current data transmission.

One drawback is that the node must listen to the channel independent of whether it has data to transmit or not. This might result in unnecessary activity in the receiver part of the node, leading to unwanted power consumption. Another drawback is that the proposed methods are agnostic to mandatory system specific transmissions. For example, in LTE system specific signals, such as reference signals (CRS, CSI-RS, etc.), or synchronization signals (PSS, SSS, etc.) must be transmitted at predetermined subframes. This might lead to unnecessary channel pollution if system specific signals and actual data transmissions are not synchronized. Another drawback is that in the methods described above there might be misalignment between a scheduling grant (allowing/scheduling a device for transmission), for example in the UL, and the time instant where LBT should be performed.

There is suggested to provide dynamically configured LBT patterns for frame based wireless access technologies. An LBT pattern may be used in order to define in which subframes (in case of LTE, the duration of a subframe is one TTI of 1 msec duration) LBT or listening is performed (in particular before transmitting data, e.g. in a subframe directly following the listening or in the same subframe after listening) during a predetermined set of subframes (in case of LTE this set may be a radio frame of 10 msec duration including 10 subframes). The method may be performed at a transmitter side, it thus is applicable in both DL and UL directions. Several examples or implementations using this concept are described.

There is suggested a method of operating a wireless device in a wireless communication network, wherein the wireless device is adapted to transmit data based on pre-determined communication schedules, each communication schedule pertaining to a scheduling time interval of predetermined length. The method comprises determining, by the wireless device, a pattern of expected transmission accesses on at least a first transmission frequency spectrum accessed with Listen-Before-Talk (LBT), the pattern covering a plurality of scheduling time intervals. The method may comprise transmitting and/or providing the pattern to a network or network node and/or configuring the wireless device according to the pattern and/or to perform transmission access according to the pattern.

A wireless device for a wireless communication network is described, the wireless device being adapted to transmit data based on pre-determined communication schedules, each communication schedule pertaining to a scheduling time interval. The wireless device is further adapted to determine a pattern of expected transmission accesses on at least a first transmission frequency spectrum accessed with Listen-Before-Talk, the pattern covering a plurality of scheduling time intervals. The wireless device may be adapted for transmitting and/or providing the pattern to a network or network node and/or for configuring the wireless device according to the pattern and/or for performing transmission access according to the pattern.

Determining a pattern of expected transmission (by the wireless device) may generally be based on one of or any combination of one or more uplink scheduling grants, one or more HARQ retransmission patterns or a corresponding history, one or more patterns of reference signal transmissions, one or more patterns of resources restricted for scheduling data, and history or statistics of one or more patterns, e.g. of a LBT time interval.

The expected transmission accesses may be transmission accesses the wireless device is expected to perform. The transmission accesses may be transmission accesses on the first transmission frequency spectrum. The communication schedules may pertain to a second transmission frequency spectrum and/or a first transmission frequency spectrum. The first and second transmission frequency spectrum may be spectra the wireless device is adapted and/or configured to transmit on.

There is also described a method of operating a network node of a wireless communication network, wherein the network node is adapted to provide communication schedules to one or more wireless devices, each communication schedule pertaining to a scheduling time interval of predetermined length. The method comprises determining, by the network node, a pattern of expected transmission accesses on at least a first transmission frequency spectrum (which may be a node transmission frequency spectrum) accessed with Listen-Before-Talk (LBT), the pattern covering a plurality of scheduling time intervals. The method may also comprise obtaining, by the network node, a pattern of expected transmission accesses on at least a first transmission frequency spectrum, e.g. for a wireless device, and/or determining a pattern of expected transmissions for a wireless device based on the obtained pattern and/or scheduling the wireless device based on the obtained pattern and/or the determined pattern for the wireless device. The method may generally comprise transmitting and/or providing the pattern and/or a determined schedule for a wireless device to the wireless device.

A network node for a wireless communication network is described, the network node being adapted to provide communication schedules to one or more wireless devices, each communication schedule pertaining to a scheduling time interval of pre-determined length. The network node is further adapted to determine a pattern of expected transmission accesses on at least a first transmission frequency spectrum (which may be a node transmission frequency spectrum) accessed with Listen-Before-Talk, the pattern covering a plurality of scheduling time intervals. The network node may also be adapted for obtaining a pattern of expected transmission accesses on at least a first transmission frequency spectrum, e.g. for a wireless device, and/or for determining a pattern of expected transmissions for a wireless device based on the obtained pattern and/or for scheduling the wireless device based on the obtained pattern and/or the determined pattern for the wireless device. The network node may generally be adapted for transmitting and/or providing the pattern and/or a determined schedule for a wireless device to the wireless device.

Determining the pattern (by the network node) may be based on at least one of or any combination of one or more patterns of scheduling data (and/or allocation data) to and/or for one or more wireless devices, one or more patterns of resources restricted for scheduling data to one or more wireless devices, one or more patterns of reference signal transmissions, and history or statistics of one or more patterns of the scheduling time interval.

The first transmission frequency spectrum may be a transmission spectrum of a wireless device or UL spectrum or a transmission spectrum of the network node or a DL spectrum; in the latter case, the spectrum may be referred to as node transmission frequency spectrum. The expected transmission accesses may be transmission accesses the network node is expected to perform. The transmission accesses may be transmission accesses on the first (node) transmission frequency spectrum. The communication schedules may pertain to a second (node) transmission frequency spectrum and/or a first (node) transmission frequency spectrum. The first and second node transmission frequency spectrum may be spectra the network node is adapted and/or configured to transmit on. First and second transmission frequency spectra of a wireless device may be spectra the network node is adapted and/or configured to schedule.

There is also described a method of operating a network of a wireless communication network, wherein the network is adapted to provide communication schedules to one or more wireless devices, each communication schedule pertaining to a scheduling time interval of predetermined length. The method comprises determining, by the network, a pattern of expected transmission accesses on at least a first transmission frequency spectrum (which may be a network or node transmission frequency spectrum) accessed with Listen-Before-Talk (LBT), the pattern covering a plurality of scheduling time intervals. The method may also comprise obtaining, by the network, a pattern of expected transmission accesses on at least a first transmission frequency spectrum, e.g. for a wireless device, and/or determining a pattern of expected transmissions for a wireless device based on the obtained pattern and/or scheduling the wireless device based on the obtained pattern and/or the determined pattern for the wireless device. The method may generally comprise transmitting and/or providing the pattern and/or a determined schedule for a wireless device to the wireless device.

A network for a wireless communication network is described, the network being adapted to provide communication schedules to one or more wireless devices, each communication schedule pertaining to a scheduling time interval of pre-determined length. The network is further adapted to determine a pattern of expected transmission accesses on at least a first transmission frequency spectrum (which may be a network or node transmission frequency spectrum) accessed with Listen-Before-Talk, the pattern covering a plurality of scheduling time intervals. The network may also be adapted for obtaining a pattern of expected transmission accesses on at least a first transmission frequency spectrum, e.g. for a wireless device, and/or for determining a pattern of expected transmissions for a wireless device based on the obtained pattern and/or for scheduling the wireless device based on the obtained pattern and/or the determined pattern for the wireless device. The network may generally be adapted for transmitting and/or providing the pattern and/or a determined schedule for a wireless device to the wireless device.

The first transmission frequency spectrum may be a transmission spectrum of a wireless device or UL spectrum or a transmission spectrum of the network or a DL spectrum; in the latter case, the spectrum may be referred to as network transmission frequency spectrum. The expected transmission accesses may be transmission accesses the network is expected to perform. The transmission accesses may be transmission accesses on the first transmission frequency spectrum. The communication schedules may pertain to a second transmission frequency spectrum (which may be a network or node transmission frequency spectrum) and/or a first transmission frequency spectrum (which may be a network or node transmission frequency spectrum). First and second network or node transmission frequency spectra may be spectra the network node is adapted and/or configured to transmit on. First and second transmission frequency spectra of a wireless device may be spectra the network node is adapted and/or configured to schedule.

The network may be a radio access network and/or comprise at least one network node, which may be connected or connectable to at least a node of a higher level and/or a core network, which itself may be considered as part of the network.

There is also proposed a computer program product comprising code and/or instructions executable by control circuitry, the code causing the control circuitry to carry out and/or control any of the methods described herein when executed by control circuitry.

Moreover, there is disclosed a storage medium storing a computer program product as described herein and/or code and/or instructions executable by control circuitry, the code causing the control circuitry to carry out and/or control any of the methods described herein when executed by control circuitry.

Generally, the pattern of expected transmission accesses may be determined based on one or more criteria, e.g. criteria disclosed herein. The criteria may include transmissions to be performed periodically, e.g. transmissions of measurement reports. The criteria may be checked periodically and/or dynamically. This allows (dynamic) adaption of the patterns and of LBT-based transmissions.

The pattern of expected transmission accesses may indicate listen-before-talk (LBT) access to and/or LBT procedure performed on at least the first transmission frequency spectrum. Additionally or alternatively, the pattern may indicate transmissions (which may require an LBT procedure to be performed).

The network node may be a base station or eNodeB, in particular according to LTE. The LTE standard is particularly suitable for using licensed and unlicensed spectra, e.g. in carrier aggregations.

A pattern may be determined based on expected transmissions and/or expected LBT procedures.

Generally, determining a pattern of expected transmission accesses may be performed dynamically and/or for pre-determined time-scales or intervals of limited duration, which may be fixed and/or variable. Determining the pattern may be based on one more criteria and/or comprise evaluating one or more criteria.

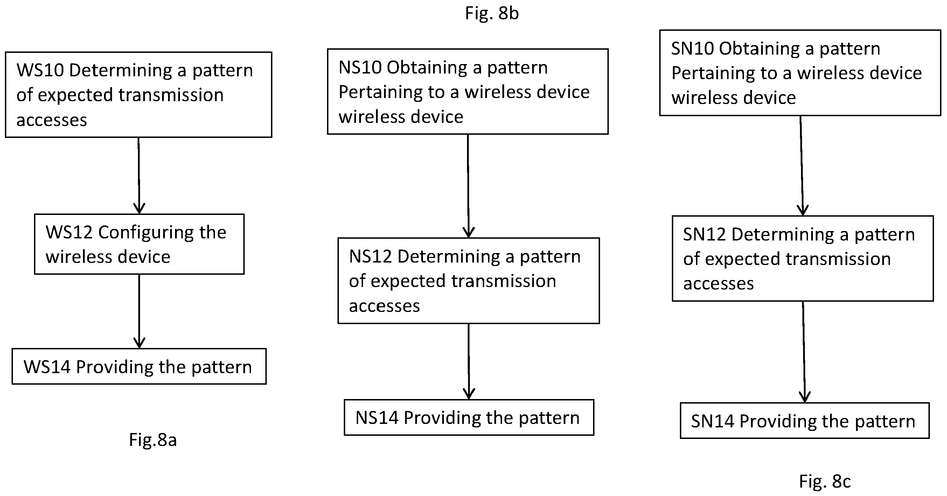

Fig. 8a shows a method of operating a wireless device. The method may comprise an action WS10 of determining a pattern of expected transmission accesses on at least a first transmission frequency spectrum accessed with Listen-Before-Talk (LBT), the pattern covering a plurality of scheduling time intervals. The method may optionally comprise an action WS14 of transmitting and/or providing the pattern to a network or network node and/or optionally to WS10 and/or WS14 an action WS12 of configuring the wireless device according to the pattern and/or to perform transmission access according to the pattern.

Fig. 8b shows a method of operating a network node. The method comprises an action NS12 of determining a pattern of expected transmission accesses on at least a first transmission frequency spectrum accessed with Listen-Before-Talk (LBT), the pattern covering a plurality of scheduling time intervals. The method may optionally comprise an action NS10 of obtaining a pattern of expected transmission accesses on at least a first transmission frequency spectrum, e.g. for a wireless device: In this case, NS12 may comprise determining the pattern of expected transmissions for a wireless device based on the obtained pattern. The method may optionally comprise an action NS14 of transmitting and/or providing the pattern and/or a determined schedule for a wireless device to a wireless device and/or to another node.

Fig. 8c shows a method of operating a network. The method comprises an action SN12 of determining a pattern of expected transmission accesses on at least a first transmission frequency spectrum accessed with Listen-Before-Talk (LBT), the pattern covering a plurality of scheduling time intervals. The method may optionally comprise an action SN10 of obtaining a pattern of expected transmission accesses on at least a first transmission frequency spectrum, e.g. for a wireless device: In this case, SN12 may comprise determining the pattern of expected transmissions for a wireless device based on the obtained pattern. The method may optionally comprise an action SN14 of transmitting and/or providing the pattern and/or a determined schedule for a wireless device to a wireless device and/or to another network node.

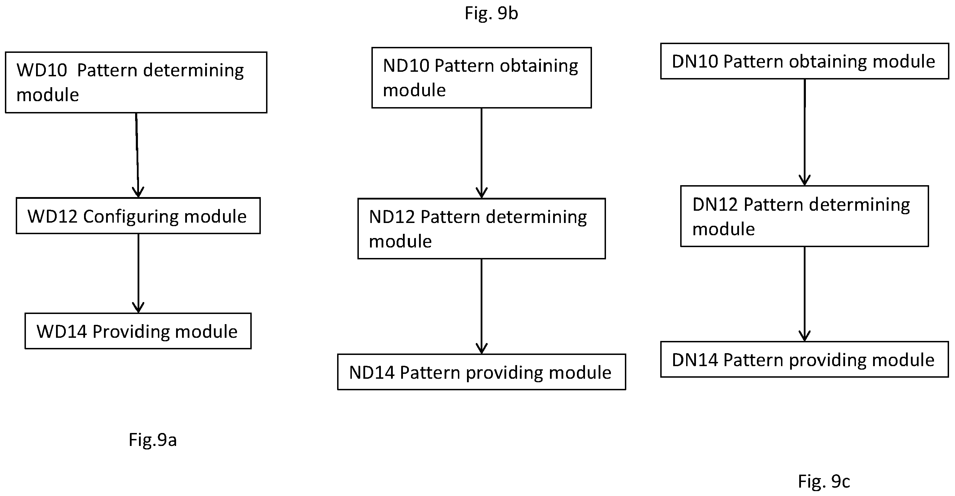

Fig. 9a shows a wireless device. The wireless device may comprise a pattern determining module WD10 for performing action WS10, and may optionally comprise a providing module WD14 for performing action WS14 and/or optionally a configuring module WD12 for performing action WS12.

Fig. 9b shows a network node. The network node comprises a pattern determining module ND12 for performing action NS12. The network node may optionally comprise a pattern obtaining module ND10 for performing action NS10. The network node may optionally comprise a pattern providing module ND14 for performing action NS14.

Fig. 9c shows a network. The network comprises a pattern determining module DN12 for performing action SN12. The network may optionally comprise a pattern obtaining module DN10 for performing action SN10. The network may optionally comprise a pattern providing module DN14 for performing action SN14.

According to one example, there may be considered a method in a wireless device like a UE or terminal, which may be connected to a wireless communication network and/or be served by a network and/or a first network node (for example an AP, eNB, etc.). The method may be for configuring an LBT pattern for accessing at least one channel (or carrier or spectrum, e.g. a first transmission frequency spectrum), which may be shared with other nodes and/or wireless devices like UEs or terminals. The LBT pattern may define how often and/or when the UE is allowed to listen to the channel and/or spectrum and/or carrier (first transmission frequency spectrum), and hence may be an upper bound of how often the UE terminal can transmit. The method may comprise the following steps:
Evaluating, by the wireless device (e.g. UE or terminal) and/or an evaluating module of the wireless device, one criterion and/or plurality of criteria. The criteria may be criteria generally used for determining a pattern, and e.g. may be based on and/or comprise one or more of:
information received from the network, e.g. a first network node, and/or
pre-defined information (which may be stored in a memory of the wireless device, and/or internal information of the wireless device or UE, e.g. which may be determined autonomously by the wireless device or UE and/or an information determining module of the wireless device, e.g. by performing measurements, for example on operation conditions. The method may also comprise determining and/or configuring, e.g. by a determining or configuring module and/or the wireless device or the UE, based on the evaluated criteria the LBT pattern (which may be called UL LBT pattern) to be used for transmission, in particular for uplink transmission. The wireless device, e.g. UE or terminal, and/or a signaling module may signal the information about the configured LBT pattern to the first network node. There may be considered a wireless device adapted for performing any of these methods and/or actions.

There is also described a method in a first network node (for example an AP, eNB, etc.), the method may be for configuring a LBT pattern for accessing at least one channel or and/or carrier and/or spectrum, which may be shared with other nodes and/or wireless devices like UEs or terminals. The LBT pattern may define how often and/or when the first network node is allowed to listen to the channel and/or carrier and/or spectrum and hence may be an upper bound of how often the first network node can transmit. The method may comprise the following steps:
Evaluating, e.g. by the first network node and/or an evaluating node, one criterion and/or a plurality of criteria (which may generally be criteria for determining the pattern), based on and/or comprising one or more of:
information received from one or more wireless devices like UEs and/or terminals (which may be in communication contact with the network or first network node and/or
be served by the network or first network node), and/or pre-defined information (which may be stored in a memory of the network and/or network device), and/or
internal information of the first network node, e.g. determined by autonomous determination of the first network node and/or an information determining module, Based on the criteria evaluation, the first network node may configure the LBT pattern to be used in the UL and/or DL transmissions, e.g. for itself and/or one or more other nodes, e.g. wireless device and/or UEs and/or terminals.

Determining a UL LBT pattern may (optionally) be based on one or more UL LBT patterns recommended by and/or obtained and/or received from a wireless device and/or UE or terminal. In particular, determining a UL LBT pattern (which may be associated to a specific wireless device), may be based on a LBT pattern received from and/or recommended by that specific wireless device.

The first network node, e.g. a signaling module, may signal the UL and/or DL LBT patterns to one or more wireless devices, and/or UEs or terminals.

The first network node, e.g. the signaling module, may signal the UL and/or DL LBT patterns to a plurality of neighbor network nodes, e.g. eNodeBs and/or higher-level nodes. There may be considered a network node adapted to perform any of these methods and/or actions.

According to the proposed approaches, the UE may perform LBT only when needed (for example when a scheduling grant has been assigned to it and/or it has data pending for transmission), hence assisting any DTX (discontinuous transmission) at the UE and improving battery consumption

The UE and/or network node do not have to listen to the LBT channel/carrier/spectrum continuously, but only when it is required, e.g. based on the data and/or common control transmissions Statistically (i.e. on average) this reduces complexity, power consumption and extra processing required for assessment/listening of the LBT channel/s.

The LBT concept may be integrated into the LTE framework following mandatory control transmissions and/or any restrictions in data transmissions.

The proposed LBT pattern concept allows for multi-cell coordination and SON operations.

The dynamic LBT pattern allows more accurate assessment of the LBT pattern e.g.it may be based on channel conditions, traffic demand etc., which may vary over the time.

In the following, a more detailed description of the proposed ideas is provided. In particular, a method for dynamic LBT patterns for frame based wireless access technologies is proposed.

The LBT pattern is created based on one or more criteria or conditions and the LBT pattern is configured for use at the transmitter by the UE and/or by the network node, e.g. depending on whether the said LBT pattern is for UL or DL transmission.

Generally, the term 'dynamic LBT pattern' or simply LBT pattern may refer to a pattern indicating access (or trying to access) a channel/spectrum/carrier after LBT and/or a pattern of performing LBT. A dynamic LBT pattern may refer to the LBT pattern being created and/or determined and/or being applicable for a limited time period (T0) e.g. over K subframes (1 ≤ K ≤ kmax), and/or over L frames (1 ≤ L ≤ Imax), and/or over M time units, e.g. over 155 ms etc. The kmax and Imax are finite values. Generally, a LBT pattern may cover a given time interval, which may comprise at least two scheduling intervals, e.g. two subframes. A LBT pattern may be considered to be a pattern of expected transmission accesses to a carrier and/or transmission frequency spectrum, in particular to one accessed with LBT and/or one accessed after and/or based on a LBT procedure. It should be noted that if a LBT procedure performed by a listening node or device indicates that the carrier or spectrum is not available (e.g. because it is in use by another device), a transmission access with LBT will not lead to a transmission by the listening node on the carrier or spectrum (until another, successful LBT procedure indicating availability of the carrier or spectrum has been performed.

After the expiry of the time period T0 the wireless device or node (i.e. UE and/or network node) may reassess one or more criteria and/or create a new LBT pattern for a following limited time period, which may the next allowed time period and so on. The following time period (e.g. T1) may be the same as the previous time period (e.g. T0), or cover a different length of time. The terms dynamic LBT pattern may also be interchangeably called as semi-static LBT patter, variable LBT pattern, adaptive LBT pattern etc.

The LBT pattern can be for UL (aka UL LBT pattern, for use at a wireless device or UE or terminal) or for DL (aka DL LBT pattern for use at the network or network node). More specifically, the term UL LBT pattern may indicate that the LBT pattern is used by the UE, e.g. after determining and/or configuring the pattern, for:
- assessing the channel on signals sent in the UL radio resource (e.g. in UL carrier frequency like in FDD or half duplex FDD and/or in a carrier that contains UL subframe like in TDD) during the listening duration and for
- transmitting UL signals during the time when the UE can transmit in the UL.

More specifically, the term DL LBT pattern may indicate that the LBT pattern is used by the network node, e.g. after determining the pattern and/or configuring itself with the pattern, for:
- assessing the channel on signals sent in the DL radio resource (e.g. in DL carrier frequency like in FDD or half duplex FDD and/or in a carrier that contains DL subframe like in TDD) during the listening duration and for
- transmitting DL signals during the time when the network node can transmit in the DL.

In some embodiments the non-limiting term UE (User Equipment) is used. The UE herein can be any type of wireless device capable of communicating with a network node or network or another UE via radio signals. The UE may also be radio communication device, target device, device to device (D2D) UE, machine type UE or UE capable of machine to machine communication (M2M), a sensor equipped with UE, PDA (personal digital assistant), Tablet, mobile terminals, smart phone, laptop embedded equipped (LEE), laptop mounted equipment (LME), USB dongles, Customer Premises Equipment (CPE) etc.

Also, in some embodiments generic terminology, "radio network node" or simply "network node (NW node)", is used. In some embodiment the network node may be referred to as a first network node. It can be any kind of network node which may comprise of base station, radio base station, base transceiver station, a centralized controller, a core network node, MME, base station controller, network controller, evolved Node B (eNB), Node B, relay node, access point, radio access point, UDN/SDN radio access node, Remote Radio Unit (RRU), Remote Radio Head (RRH), OSS, O&M, SON etc.

Some embodiments are described in the following sections.

There is disclosed a method for operating a wireless device or UE or terminal for configuring a UL LBT pattern.

In this embodiment, the wireless device like a UE or terminal configures the dynamic UL LBT pattern (or simply LBT pattern) for accessing the channel or spectrum and transmitting data to the connected network node (in the UL direction). The wireless device or UE may, for determining the pattern, assess and/or evaluate a number of criteria and based on that may define the LBT pattern to be used for an arbitrary time period in the future. Note that the pattern in this case may be a pattern pertaining to the wireless device performing the determining.

The UE can configure the LBT pattern based on at least one or any other combination of the proposed criteria.

The criteria generally may be based on and/or may comprise parameters, some of which may be internally available to the UE, e.g. via autonomous (and/or configured, e.g. by the network node or network) determination by the UE. In this case no any extra signaling may be required. Some other parameters may be made available to the UE by the network, e.g. a serving network node and/or a first network node.

One or more parameters may be pre-defined. If the same parameters are available via two or more means, then the wireless device or UE may select the value of the parameter based on a function e.g. based on average, maximum value, minimum value etc.

The time duration (length) of the LBT pattern can be predetermined and/or configured by the network node. At the end of the LBT pattern period, the UE may determine a new LBT pattern, e.g. by re-assessing the criteria and defining a new LBT pattern, which may have the same length and/or another length. In other words, the length of the pattern may be configurable and/or dynamically determined, e.g. by the network and/or network node.

In another example, the LBT pattern determination and/or configuration can be triggered by the network, e.g. the serving network node, through explicit signaling of an LBT pattern configuration request to the wireless device or UE. The wireless device may be adapted such that this new signal triggers the determining of the pattern, e.g. assessment of the conditions at the UE and defining a new LBT pattern. The wireless device may comprise a corresponding LBT request reception module.

One of the criteria may be the current time, e.g. compared to a pattern determining timing prescribing when pattern determining has to be performed. The timing may set determining the pattern at certain times, which may be configured by the network or network node, and/or pre-determined and/or determined by the wireless device. The timing may indicate periodic determining of the pattern.

The LBT pattern reconfiguration can generally be periodic or aperiodic.

Alternatively or additionally, for another criterion, the UE may be adapted to monitor and/or can monitor and/or may comprise a corresponding monitoring module for monitoring how often each LBT trial or procedure results in a successful channel or spectrum access. If the number of LBT trials is larger compared to the number of successful access to the channel or spectrum compared to a certain threshold, then an LBT pattern reconfiguration event may be triggered. When this event is triggered the wireless device or UE may determine the pattern, e.g. by assessing the criteria, and/or (re-)configure the pattern and/or LBT. The wireless device or UE may be adapted accordingly.

Alternatively or additionally, one or more of the following criteria may be considered: - one or more pre-defined rules, e.g. by default the wireless device or UE may be required to create a pattern like an LBT pattern, and/or to configure it for transmitting (signals) in the uplink;
explicit indication/instruction/configuration received from the network or network node, e.g. via allocation data. For example, the wireless device or UE may be allowed to create a pattern or LBT pattern and configure the pattern only when explicitly allowed or configured by the network node (e.g. by first network node);
the wireless device or UE may autonomously decide to determine/create the pattern/LBT pattern and/or indicate (by transmitting a corresponding indication) this to the network or network node; the wireless device or UE may need confirmation from the network or network node whether to use the LBT pattern or not for uplink transmission.

Alternatively or additionally, the following conditions or criteria for determining the pattern and/or configuring the UL LBT pattern may be considered:
One or more conditions or criteria that can be used for determining the pattern or configuring the LBT pattern at or by a wireless device or UE or terminal, e.g. for UL transmission, may include the following:
Scheduling grants
Retransmission (HARQ) patterns
Reference signal patterns
Past pattern/LBT pattern (and/or pattern history) and its success ratio
buffer status of the wireless device/UE (in particular, whether the buffer
contains/stores data for UL transmission)

In the following a more detailed description of the above conditions or criteria is provided.

Scheduling grants: This refers to any indication of a scheduling possibility (possibility/allowance of scheduling a transmission and/or of transmitting data) provided and/or defined by a scheduling entity, e.g. a network and/or network node, e.g. serving network node and/or allocating node. For example, in LTE UL the UE may receive UL scheduling grants from the serving network node. The UL scheduling grants contain relevant information for performing an UL data transmission and they may be conveyed by and/or transmitted via a DL control channel (PDCCH). Once the UL scheduling grant has been received by the UE, the UE is able to transmit data after a predetermined time period.

This predetermined time period corresponds to a number of subframes with a typical duration equal to 4 subframes in case of LTE. This time period may be for processing the PDCCH and preparing the UL data to be transmitted.

Thus, when a scheduling grant has been received by a UE then the point in time when UL transmission of data is going to occur is determined. The UE can then configure an LBT time period before the subframe where the UL data transmission is about to occur. In another example, the UE might be aware of any UL traffic pattern requirements, such as UL data transmissions with fixed delay, which imposes restrictions on how often the scheduling grants should be transmitted. In such a case, the UE may know in advance a number of scheduling grants and thus it can define a corresponding LBT pattern. In yet another example, a persistent scheduling principle might be used from the UL scheduler leading to predetermined UL scheduling grants. In LTE, a semi-persistent scheduling (SPS) scheduling principle might be used thus leading to allocations which would repeat according to a pre-configured periodicity. Based on this information, the UE might configure an LBT pattern of an equal periodicity that follows the SPS configuration.

Retransmission (HARQ) patterns: This refers to predefined time instances used for transmitting unsuccessful received data packets. In LTE UL, a synchronous HARQ process is used for handling unsuccessful transmissions. Retransmissions are scheduled at fixed time instances. In total, 8 different HARQ processes (which have sub-processes) are used, meaning that the periodicity between two consecutive retransmissions of the same packet is 8 msec (a subframe or TTI duration being 1msec). In case of an unsuccessfully received packet, the UE knows in advance the time instances of consecutive retransmissions, hence it can define a pattern/LBT pattern that matches to the above time instances. The UE may perform LBT before the upcoming retransmission subframe. Retransmission occurs only when no other transmission is sensed during the LBT time period/interval.

Reference Signal patterns: This refers to any predefined time instances where the UE must transmit any type of reference signals. In LTE UL, there are two type of reference signals the Demodulation Reference Signals (DMRS) used for coherent data demodulation at the BS and the Sounding Reference Signals (SRS) used for channel estimation for frequency selective scheduling. The SRS can be broadband or narrowband and occupy the last OFDM symbol in each resource block. The periodicity of SRS is determined by the upper layers and signaled to the UE via RRC messages. Once the UE receives the information on how often and when in time the SRS should be transmitted it can construct an LBT pattern that follows the SRS pattern.

Past LBT pattern and its Success ratio (history): The success ratio of an LBT pattern refers to how much successful the LBT pattern was in terms of actual data transmissions. The ratio can be calculated as the number of data transmissions over the number of LBT trials over a predetermined time period.

A ratio equal to one means an equal number of LBT trials/procedures and data transmissions, i.e. the channel or spectrum was sensed empty during all LBT trials/procedures, allowing the wireless device or UE to transmit on the channel/spectrum at all times LBT was performed. On the other hand, a ratio close to zero indicates that the channel/spectrum was occupied most of the time and hence the UE had very small chances to get transmit on the spectrum/channel. The ratio can be easily calculated at the wireless device/UE since both number of LBT periods and transmission attempts are available at the wireless device or UE, which may be adapted to store and/or store LBT procedure results. In another example, the ratio can be calculated as the number of successful data transmissions over the number of LBT trials/procedure.

In such a case, the impact of collisions may also be taken into account as criterion. The ratio can also be expressed in N discreet levels. For example, in case N equals to 3 then ratio can be low, medium or high. In yet another example, low ratio can correspond to a ratio of less than 20%, medium ratio can correspond to a ratio between 21% and 79% while high ratio can correspond to a ratio of more than 80%. A low ratio is in principle an indication of high channel or spectrum occupancy from other device or nodes like APs or UEs. This can be due to high load on the networks or systematic collisions that might occur between for example two LA-LTE networks. Thus, in case of low ratio, the UE might adapt the LBT pattern either by increasing the number of LBT trials/procedures or shifting them in time in order to avoid systematic collisions. The UE may constantly monitor the ratio and may determine or re-tunes the LBT pattern accordingly.

UE buffer status: This refers to the amount of data in the buffer of the wireless device or UE. It can be expressed in absolute terms such as a number of bits or in relative terms with respect to the maximum number of bits that the wireless device or UE buffer can support. In case a relative measure is used, the buffer status can also be expressed in discrete levels, such as low, medium and high in case 3 levels are used. This information is locally available (locally available may generally refer to being internal information or being internally available) to the wireless device/UE. In case of a high level in buffer status, the wireless device/UE could increase the frequency of the LBT trials/procedure or in other words the density of the pattern/LBT pattern in order to ensure higher channel access ratio.

Combined criteria: When two or more criteria mentioned above are fulfilled and/or based on more than two criteria, the wireless device/UE may determine and/or configure the pattern/ LBT pattern based on the combination of the (fulfilled) criteria. In one example, the wireless device/UE may determine the LBT pattern from each fulfilled criterion as mentioned above.

The final LBT pattern of the combined criteria can be a function of the LBT pattern of each criterion. Hence if *LBTᵢ* is the LBT pattern of criterion *c*₁ then the LBT pattern of a combination of N criteria is *LBT* = *f*(*LBT*₁,...,*LBT_{N}*). In one example, the function f can be the union of the input sets. Hence the final LBT is the union (logical OR operation) of all LBT patterns taken from all combined criteria. In yet another example, the final LBT pattern can be a weighted combination of the LBT patterns of each one of the combined criteria, i.e. *LBT* = *f*(*w*₁,*LBT*₂*,...,w_{N}*.*LBT_{N}*)*.* In one example, the weights wi can be binary taking values of 0 or 1, where a zero value means that the current LBT pattern is not taken into account. By having weights, the UE can prioritize LBT patterns when multiple criteria are met. In yet another example, the weights can take soft values from the set [0 1], where the meaning of a soft value corresponds to the fraction of LBT trials taken from a specific LBT pattern. Hence, if a criterion *cᵢ* produces an LBT pattern *LBTᵢ* with an amount of X LBT trials, then a weight wi equal to 0.5 means that only half of the LBT trials are going to be used. In yet another alternative, the weights can be bitmaps showing also which LBT trials from an LBT pattern are going to be used.

A method for operating a wireless device/UE to signal and/or provide a UL LBT pattern to a network or network node is described.

Based on the above, once the wireless device/UE has determined the pattern, e.g. by evaluating/assessing a number of criteria and defining the pattern/LBT pattern, to be used for a future time period, the UE can provide and/or signal the determined pattern/the LBT pattern to the network, e.g. the first network node and/or serving network node.

Providing/signaling may generally comprise transmitting a bitmap of a size equal to the size of the pattern provided/the LBT pattern in time, where each entry may correspond to one scheduling time interval, e.g. a subframe. The entries can be either zero or one where 1's mean that LBT will be performed during that scheduling time interval or subframe. For example, in LTE, if the time period of an LBT pattern is one radio frame (equals to 10 msec or 10 subframes or scheduling time intervals) and the UE has decided to perform LBT at subframes 2 and 6, then the signaled bitmap could be as follows [0 0 1 0 0 0 1 0 0 0] (starting counting the subframes at 0). In yet another example, the UE could signal an index to a set of predetermined patterns/LBT patterns that are known to both wireless device/UE and network or network node. The network or network node may collect patterns/LBT patterns from different connected wireless devices/UEs and may further process them. For example, they can be used in SON functionalities (e.g. SON network node) for LBT pattern alignment among the connected wireless devices/UEs. In another example, the network node can signal received patterns to other network node. Examples of other network nodes are neighboring radio network node, core network node, O&M, OSS, SON node etc. For example the first network node may signal the patterns used by each connected wireless device or UE to neighbor nodes. The neighboring nodes may use this information when assigning their own patterns e.g. two or more network nodes may align as much as possible their own patterns. In addition, the network node could signal the LBT patterns of only relevant UEs to other UEs, such as to the UEs close to a cell's border.

There is also disclosed a method for operating a network or network node to determine/configure a pattern/LBT pattern.

In this variant, determining/configuring the pattern/LBT pattern by the network or network node may be for accessing the channel/spectrum and/or transmitting data to its connected wireless devices and/or UEs (in the DL direction). The network or network node for determining the pattern may assess/evaluate a number of criteria, and/or may determine or define the pattern based on that and/or a number of criteria. The pattern may be determined to be used for and/or at an arbitrary time period in the future. The network or network node may determine and/or configure the LBT pattern based on at least one or any other combination of the proposed criteria. The criteria (and/or relevant parameters pertaining to the criteria) may be obtained by the network or network node based on one or more of: information received from the wireless device and/or UE or terminal (which may be the one the pattern pertains to), pre-defined information and/or autonomous determination by the network or network node.

The time duration (length) of the pattern/LBT pattern (the time covered by the pattern) generally may be predetermined. At the end of the time covered by the pattern and/or the LBT pattern period, the network or network node may re-determine the pattern, e.g. by re-assessing the criteria and/or defining a new pattern/LBT pattern. The pattern/LBT pattern re-determination/configuration can be periodic or aperiodic. In another example, the network or network node may be adapted to monitor and/or can monitor and/or comprise a monitoring module for monitoring how often each LBT trial/procedure results in a successful transmission on the spectrum/channel. If the number of LBT trials/procedures is larger than the number of successful accesses to the channel/spectrum (a successful access generally allowing/leading to transmission of data on the spectrum/channel listened to), then an LBT pattern reconfiguration event can be triggered. When this event is triggered the network or network node performs a new determination of the pattern, e.g. re-assesses the criteria and reconfigures the LBT pattern.

Additionally or alternatively the network or network node may also create the LBT pattern for uplink transmission, e.g. a pattern/LBT pattern for use by a wireless device or UE in uplink.

Conditions or criteria for determining and/or configuring a pattern pertaining to the network or network node and/or a DL LBT pattern are now described.

The conditions or criteria that can be used for configuring the pattern pertaining to the network or network node and/or an LBT pattern at a network or network node for DL transmissions and/or a DL LBT pattern may include one or more of the following: Scheduling patterns

### Reference signal patterns

Past LBT pattern and its success ratio
Cell load

In the following a more detailed description of the above conditions or criteria is provided.

Scheduling patterns: This refers to any pattern covering indications of data transmissions in the DL direction and/or on a carrier/spectrum for DL transmissions, in particular utilizing the spectrum listened to by the LBT procedure. The pattern can be defined over a predetermined period of time and re-evaluated at the end of each such period. An example of such a period can be a radio frame of 10 msec consisting of ten subframes. The pattern can indicate at which time instance or subframe a data transmission is scheduled to occur. By means of data transmissions, any regular transmissions occurring at the PDSCH channel is covered.

The pattern can be the outcome of/ be provided by a scheduling entity, which may be located at and/or be implemented on the network node. In another example, a scheduling pattern can correspond to a transmission restriction pattern where the pattern indicates at which time instance or subframe no data transmission is allowed to occur.

An example of such pattern is the ABS pattern standardized in LTE Rel. 10 under elCIC work item. The ABS pattern is a bitmap which shows at which time instances the network node is allowed or not to transmit data.

So if the network node is not allowed to transmit data at a specific time instance or subframe then there is no need to perform any LBT for that subframe. In addition, the network node might be aware of such transmission restriction patterns of surrounding or neighbor network nodes and utilize this information for configuring its own LBT pattern. For example, if the network node knows that a neighbor network node is not allowed to transmit at a specific subframe then it can configure an LBT trial on that subframe since there is high probability to access the channel on that subframe. Reference signal patterns: This refers to any predefined time instances where the network node must transmit any type of reference signals. In LTE DL, there are several types of reference signals such as the Demodulation Reference Signals (DMRS) used for coherent data demodulation, Cell Specific Reference Signals (CRS), Channel State Information reference Signals (CSI-RS) etc. The periodicity of the different types of reference signals is determined by the upper layers hence the network node can construct an LBT pattern that follows the reference signal patterns. The motivation here is to align data transmissions with mandatory system transmissions and allow as much as possible clean subframes.

Past LBT pattern and its success ratio (historical information): This is similar/analogous to the one used for the UL transmissions so it is not further explained here.

Cell load: This refers to the average load of a cell in the DL direction. It can be expressed in terms of radio resource utilization that shows the ratio of time-frequency resources used to carry the offered traffic during a time period over the available time-frequency resources of that period.

Resource utilization may be defined in percentage values. For example, an average resource utilization of 10% means that in average 10% of the available resources are occupied in order to serve the amount of offered traffic. Each cell can calculate its own load or resource utilization over a predetermined time period based on the performance of its connected wireless devices or UEs, their traffic generation patterns and their buffer status. The determined cell load can also be expressed in terms of N discrete levels. In an example, where N=3, a low, medium and high level can be used. In a yet another example, low level can correspond to utilization lower to 10%, medium level can correspond to a utilization level above 10% and below 60% and a high level can correspond to a utilization level of above 60%. The utilization values or levels are an indication of how much load there is on each cell. Hence a utilization value of 80% indicates a cell with a lot of carried traffic and typically long queuing times. Thus in case of a high level cell load, the network or network node could increase the frequency of the LBT trials/procedures or in other words the density of the LBT pattern in order to ensure higher channel access ratio.

Combined criteria: When two or more criteria mentioned above are fulfilled and/or based on a combination of at least two of the above criteria, the network or network node may determine and/or configure the pattern/DL LBT pattern, in particular based on the combination of the LBT patterns of each one of the combined criteria. This is similar to the one used for the UL transmissions so it is not further explained here.

There is also described the determining and/or configuring a UL LBT pattern (e.g. for a wireless device) in or by a network or network node.

In one embodiment, the network or network node may determine/create the pattern/LBT pattern for uplink transmission for a wireless device, e.g. a LBT pattern for use by the wireless device or UE in uplink, and/or may provide the pattern, e.g. by signaling information about the pattern, to the wireless device or UE. For example, the network or network node may forbid the UE to determine or create any UL LBT pattern (e.g. by configuring the wireless device correspondingly). The network node or network may determine or create the UL LBT pattern and/or configure the wireless device or UE with the pattern/LBT pattern.

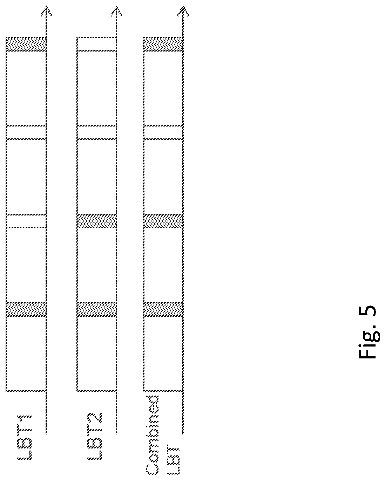

Alternatively or additionally, the network or network node base determining the pattern on an LBT determined and provided by the wireless device and/or may take into account the LBT pattern created by the UE (e.g., as described above), which may be one of the criteria determining may be based on, in addition to one or more other criteria for determining the LBT pattern for UL transmission. The resulting pattern may be called a composite LBT pattern for UL (see Fig. 5). The network or network node may use one or more criteria for determining/creating the LBT pattern for UL transmission as described above (in particular, one or more criteria suggested for determining the pattern by the wireless device). In a composite LBT pattern, the LBT procedure is performed by the wireless device or UE in subframes according to an operation or a function or a rule. For example, the LBT procedure is to be performed by the wireless device or UE in those subframes in which both the wireless device or UE and the network or network node identify the need for a LBT procedure (which may be represented by a corresponding pattern, e.g. provided by the wireless device). The patterns may for example be combined via an AND operation if indicated bitwise. The AND rule or operation can be used when interference is low or moderate, e.g. below a threshold. In yet another example, the LBT procedure may be performed by the UE in those subframes where at least one of the UE and the network or network node identifies the need for LBT, which may be represented by an OR operation. The OR rule or operation can be used when interference is high or above a threshold. There is described a method for operating a network or network node including providing or signaling a pattern/LBT pattern.

Once the network or network node has determined the pattern, e.g. has assessed/evaluated a number of criteria and has defined the UL and/or DL LBT patterns as described herein to be used for a future time period, the network or network node may signal the pattern/s, e.g. UL and/or DL LBT patterns, to its connected wireless devices or UEs as well as to other neighbor network nodes. Providing and/or signaling again may comprise transmitting a bitmap of a size equal to the size of the LBT pattern in time where each entry corresponds to one scheduling time interval or subframe. The entries can be either 0 or 1, wherein 1's may mean that LBT will be performed during that subframe. The network node signals the for example the DL LBT pattern to its connected wireless devices or UEs, which can utilize this information e.g. for defining or determining the time instances on which they should potentially expect DL data. In some cases, the network or network node may not signal the information about the UL LBT pattern to the UE, or may signal only to subset of the UEs e.g. UEs whose UL pattern can be estimated more reliably such as UEs close to the network or network node. In this case, the network or network node may however permit the UE (not provided with UL LBT pattern) to create its own UL PBT pattern and use it until at least a certain time period e.g. over the next 50 frames. In addition, the network or network node can provide or signal the information about the UL and/or DL LBT patterns to other network nodes such as neighbor network node, O&M, OSS, SON, core network node (e.g. MME) etc. For example one eNB may signal the information about the LBP patterns to another eNB over X2 interface in LTE. This information can be used for radio management tasks e.g. coordinating LBT patterns among different network nodes, improving network performance, tuning or setting of radio parameters such as carrier bandwidth, network planning such as number of radio nodes to be deployed in coverage area etc.

There is also disclosed a method for operating a wireless device or UE including providing and/or signaling a capability to determine and/or configure a pattern of expected transmission accesses and/or associated with creation and configuration of an UL LBT pattern.

In addition or alternatively to the above, there may be considered a method for operating a wireless device or UE, the wireless device or UE being adapted to determine and/or configure a pattern of expected transmission accesses and/or to perform a method for operating a wireless device as described herein, the method comprising providing and/or signaling to a network node and/or network an indication that the wireless device is capable of this determining and/or configuring. There may be considered a wireless device adapted accordingly and/or comprising a capability providing module for such providing and/or signaling.

According to one variant, a wireless device or UE may be adapted to provide or signal and/or may provide or signal and/or may comprise a providing module for providing and/or signaling a capability information or indication to a network or network node (e.g. access point, base station, eNodeB, relay, core network (MME) etc), the information or indication indicating whether the UE or wireless device is capable of determining/creating and/or using/configuring a UL LBT pattern or not for UL transmission.

More specifically, the wireless device or UE may indicate in its capability indication or message that it is capable of any one of the methods for operating the wireless device as disclosed herein. The capability information or indication may typically sent via higher layer signaling (e.g., RRC signaling) to the network node or network. The information or indication may be sent during initial call setup or after cell change (e.g., handover etc) or during the session or call.

The capability information or indication may also contain additional or more specific informations such as:
that the wireless device or UE is capable of autonomously determining and
recommending one or more UL LBT patterns to the network or network node;
that the wireless device or UE is capable of autonomously determining and recommending one or more UL LBT patterns to the network or network node provided the UE is explicitly requested by the network or network node;
that the wireless device or UE is capable of using the UL LBT pattern indicated by the network or network node for UL transmission;
that the wireless device or UE is capable of determining/creating a UL LBT pattern for certain spectra or bands, e.g. spectra or bands above 2 GHz;

A network or network node in addition or alternatively to the above may be adapted for receiving and/or receive and/or comprise a receiving module for receiving such capability information or indication from a wireless device and/or to use the capability information or indication for performing one or more radio operation tasks or network management tasks.

The tasks may comprise one or more of:
Forwarding the received capability information or indication to another network node which may use it after cell change of the wireless device or UE;
Requesting the wireless device or UE to determine/create the UL LBT pattern if the wireless device/UE is capable of doing so as indicated by its capability information or indication;
Using a UL pattern received from the wireless device to create a composite pattern for UL as described above;
Storing the received capability information or indication, and using it in the future, e.g., when the same wireless device or UE intends to transmit in the UL.

Generally, for transmitting a radio signal in an unlicensed spectrum, the network or network node (e.g., UE and/or network node) may:
dynamically determine or create a UL and/or DL LBT pattern based on one or more criteria, wherein the dynamic LBT pattern is applicable over a limited period of time (T0); and/or
configure the dynamic UL and/or DL pattern for transmission using LBT (or for reception to signals indicated by the pattern), e.g. the network or network node may configure a wireless device with a UL LBT pattern for UL transmission or network node itself may configure a DL LBT pattern for DL transmission, and/or the network node may configure itself for reception according to a UL pattern and/or a wireless device for reception according to a DL pattern; and/or
use the dynamic pattern for UL and/or DL channel assessment and UL and/or DL signal transmission.

The network or network node determining or creating a UL LBT pattern may also take into account the UL dynamic LBT pattern created or recommended by the UE.

The network or network node may also signal the UL and/or DL LBT patterns to other network nodes, e.g. neighboring network nodes, core network node etc.

Alternatively or additionally, there are disclosed:
E1. A method of operating a wireless device in a wireless communication network, wherein the wireless device is adapted to transmit data based during a communication schedule, each communication schedule pertaining to a scheduling time interval of predetermined length. The method may comprise determining, by the wireless device, a first pattern of time resources, wherein each time resource consists of the scheduling time interval and a Listen-Before-Talk (LBT) time interval, wherein the LBT time interval may be used by the wireless device to assess whether or not to schedule transmission during the scheduling time interval. Determining of the pattern may be based on at least one of: uplink scheduling grants; HARQ retransmission pattern or history; pattern of reference signal transmissions; pattern of resources restricted for scheduling data; and history or statistics of one or more patterns of the LBT time interval. The method may further comprise transmitting the determined first pattern of the time resources to a network node and/or to another wireless device.
E2 The method of E1, wherein determination of the first pattern of the time resources is further based on a buffer size of the wireless device.
E3. The method of any of E1 or E2, further comprising assessing whether or not to schedule transmission during the scheduling time interval by comparing the signal measured during the LBT time interval with a threshold.
E4. The method of any of E1 to E3, wherein the first pattern of the time resources comprise of a sequence or string of bits, wherein each time resource is associated with a bit where 0 indicates that the assessment is not required or will not be performed in the LBT time interval of the corresponding time resource and 1 indicates that the assessment is required or will be performed in the LBT time interval of the corresponding time resource.
E5. The method of any of E1 to E4, further comprising receiving a second pattern of the time resources from the network node, wherein the second pattern of the time resources is determined by the network node based on at least the pattern of the time resources.
E6. A wireless device for a wireless communication network, the wireless device being adapted to perform a method according to any of E1 to E5.
E7. A method of operating a network node of a wireless communication network, wherein the network node is adapted to schedule one or more wireless devices during a communication schedule, each communication schedule pertaining to a scheduling time interval of predetermined length. The method may comprise determining, by the network node, a pattern of time resources, wherein each time resource consists of the scheduling time interval and a Listen-Before-Talk (LBT) time interval. The LBT time interval may be used by the network node to assess whether or not to schedule transmission during the scheduling time interval. Determining the pattern may be based on at least one of: a pattern of scheduling data to one or more wireless devices; pattern of resources restricted for scheduling data to one or more wireless devices; pattern of reference signal transmissions; and history or statistics of one or more patterns of the scheduling time interval. The method may comprise configuring, e.g. by the network node, one or more wireless devices with the determined first pattern of the time resources for scheduling transmissions.
E8. The method of E7, wherein determination of the pattern of the time resources is based on a cell load or resources used by the network node.
E9. The method of any of E7 or E8, further comprising assessing whether or not to schedule transmission during the scheduling time interval by comparing the signal measured during the LBT time interval with a threshold.
E10. The method of any of E7 to E9, wherein the pattern of the time resources comprise of a sequence or string of bits, wherein each time resource is associated with a bit where 0 indicates that the assessment is not required or will not be performed in the LBT time interval of the corresponding time resource and 1 indicates that the assessment is required or will be performed in the LBT time interval of the corresponding time resource.
E11. The method of any of E7 to E10, further comprising receiving a second pattern of the time resources from at least one wireless device.
E12. The method of any of E7 to E11, further comprising determining a third pattern of the time resources, said pattern is based on at least the said received second pattern
E13. The method of any of E7 to E12, further comprising transmitting the determined first and/or third patterns of the time resources to another network node and/or to one or more wireless devices.
E14. The method of any of E7 to E13, further comprising configuring the determined third pattern of the time resources for scheduling transmissions to one or more wireless devices
E15. The method of any of E7 to E14, further comprising receiving from at least one wireless device signaling with capability information indicating whether or not the wireless device is able to create and use UL LBT pattern for UL transmission.
E16. A network node for a wireless communication network, the network node being adapted to perform any one of the methods of E7 to E15.

In the context of this specification, a scheduling time interval may have a pre-determined length (duration), which may be pre-determined according to a standard the wireless communication network (and/or the wireless device and/or network node) complies with, e.g. LTE/E-UTRA.

The scheduling time interval may refer to an interval for which the network and/or network node provides scheduling information and/or for which the network and/or network node schedules communication for a wireless device. A scheduling time interval may be and/or comprise a TTI (or it may comprise more than one TTI). A scheduling time interval may be determined and/or defined by or within a time structure, which may be defined for a carrier and/or spectrum and/or operating such, in particular a licensed carrier and/or spectrum.

There may be generally prescribed a time-structure for a carrier and/or frequency spectrum, which may be licensed. The time-structure may be defined according to a standard, e.g. LTE. The time-structure may define a scheduling time interval and/or a TTI and/or sub- or superdivisions, e.g. a subframe as TTI and/or scheduling time interval, with slots and/or symbols as subdivisions and a frame as superdivision, in particular for LTE. It may be considered that the time-structure is utilized for the expected pattern of transmission accesses, e.g. by a transmitter and/or wireless device and/or network node.

A network node, e.g. a base station or eNodeB, may be adapted to provide and/or define and/or control one or more cells, e.g. a group of cells, which may be carrier aggregated (CA) cells. The group of cells may comprise at least one primary cell, which may be considered to be a member of the group and/or to be associated to the group. The cell group may comprise one or more secondary cells (it should be noted that every group may comprise secondary cells, not only a secondary group; the secondary in this context refers to being secondary to the primary cell of a group). A primary cell may be adapted and/or utilised for providing control information (in particular allocation data, and/or scheduling and/or allocation information regarding the primary cell and/or the group of cells to and/or from a terminal connected for communication (transmission and reception) and/or configured with the cell. The control information may pertain to the primary cell and/or the group of cells. Each primary cell and/or the associated group may be associated to a specific network node. A cell may comprise a carrier used for UL and DL, and/or at least one spectrum and/or carrier each for UL and DL; a transmission spectrum may generally refer to a carrier or spectrum used for UL transmission by a wireless device, and a carrier or spectrum used for DL transmission by the network or network node. Carries or spectra of carrier aggregated cells may be considered to be carrier aggregated carriers or spectra. Generally, a primary cell may comprise licensed carriers and spectra, a secondary cell may comprise a carriers and/or spectra requiring LBT. A serving network node may be a network node utilised as allocating or controlling node and/or a network node adapted to and/or performing control functionality for a wireless device, e.g. by transmitting and/or providing allocation data, which may be used for configuring the wireless device.

Control circuitry may generally comprise one or more processors and/or processing cores. It may be considered that control circuitry comprises and/or is connected or connectable to one or more memories or storage devices, which may be adapted to store code and/or instructions and/or data.

Radio circuitry may generally comprise transmitter circuitry and/or receiver circuitry and/or transceiving circuitry adapted for wirelessly transmitting and/or receiving data or signals in particular on the spectra or carriers described herein. A device adapted for transmitting and/or receiving on a carrier or frequency may comprise corresponding radio circuitry. Radio circuitry may be connected or connectable to antenna circuitry and/or be controlled or controllable by control circuitry.

Antenna circuitry may comprise one or more antennas or antenna elements and/or antenna arrangements, in particular for transmitting and/or receiving on carriers and/or spectra used by associated radio circuitry. Antenna circuitry may comprise additionally components for manipulating or processing signals, e.g. a pre-amplifier and/or mixer and/or multiplexer. Antenna circuitry may be connected or connectable to radio circuitry and/or controlled or controllable by control circuitry.

Controlling a wireless device and/or scheduling may be performed such that scheduling information is provided or determined for each scheduling time interval, so that for each new interval new scheduling information is provided or determined.

Configuring a wireless device or node may involve instructing and/or causing the wireless device or node to change its configuration, e.g. at least one setting and/or register entry and/or operational mode. A wireless device or node may be adapted to configure itself. Configuring a node or wireless device by another device or node or a network may refer to and/or comprise transmitting information and/or data and/or instructions to the wireless device or node by the other device or node or the network, e.g. allocation data and/or scheduling data and/or scheduling grants.

A wireless communication network may comprise a radio access network (RAN), which may be adapted to perform according to one or more standards, in particular LTE, and/or radio access technologies (RAT).

A network device or node and/or a wireless device may be or comprise a software/program arrangement arranged to be executable by a hardware device, e.g. control circuitry, and/or storable in a memory, which may provide the described functionality and/or corresponding control functionality.

A cellular network or mobile or wireless communication network may comprise e.g. an LTE network (FDD or TDD), UTRA network, CDMA network, WiMAX, GSM network, any network employing any one or more radio access technologies (RATs) for cellular operation. The description herein is given for LTE, but it is not limited to the LTE RAT.

RAT (radio access technology) may generally include: e.g. LTE FDD, LTE TDD, GSM, CDMA, WCDMA, WiFi, WLAN, WiMAX, etc.

A storage medium may be adapted to store data and/or store instructions executable by control circuitry and/or a computing device, the instruction causing the control circuitry and/or computing device to carry out and/or control any one of the methods described herein when executed by the control circuitry and/or computing device. A storage medium may generally be computer-readable, e.g. an optical disc and/or magnetic memory and/or a volatile or non-volatile memory and/or flash memory and/or RAM and/or ROM and/or EPROM and/or EEPROM and/or buffer memory and/or cache memory and/or a database.

Resources or communication resources or radio resources may generally be frequency and/or time resources (which may be called time/frequency resources). Allocated or scheduled resources may comprise and/or refer to frequency-related information, in particular regarding one or more carriers and/or bandwidth and/or subcarriers and/or time-related information, in particular regarding frames and/or slots and/or subframes, and/or regarding resource blocks and/or time/frequency hopping information. Allocated resources may in particular refer to UL resources, e.g. UL resources for a first wireless device to transmit to and/or for a second wireless device. Transmitting on allocated resources and/or utilizing allocated resources may comprise transmitting data on the resources allocated, e.g. on the frequency and/or subcarrier and/or carrier and/or timeslots or subframes indicated. It may generally be considered that allocated resources may be released and/or de-allocated. A network or a node of a network, e.g. an allocation or network node, may be adapted to determine and/or transmit corresponding allocation data indicating release or de-allocation of resources to one or more wireless devices, in particular to a first wireless device.

Allocation data may be considered to be data indicating and/or granting resources allocated by the controlling or allocation node, in particular data identifying or indicating which resources are reserved or allocated for communication for a wireless device and/or which resources a wireless device may use for communication and/or data indicating a resource grant or release. A grant or resource or scheduling grant may be considered to be one example of allocation data. It may be considered that an allocation node or network node is adapted to transmit allocation data directly to a node or wireless device and/or indirectly, e.g. via a relay node and/or another node or base station. Allocation data may comprise control data and/or be part of or form a message, in particular according to a pre-defined format, for example a DCI format, which may be defined in a standard, e.g. LTE. Allocation data may comprise configuration data, which may comprise instruction to configure and/or set a user equipment for a specific operation mode, e.g. in regards to the use of receiver and/or transmitter and/or transceiver and/or use of transmission (e.g. TM) and/or reception mode, and/or may comprise scheduling data, e.g. granting resources and/or indicating resources to be used for transmission and/or reception. A scheduling assignment may be considered to represent scheduling data and/or be seen as an example of allocation data. A scheduling assignment may in particular refer to and/or indicate resources to be used for communication or operation.

Signaling a pattern may comprise transmitting the pattern and/or corresponding data.

Obtaining a pattern may comprise receiving a transmission comprising and/or indicating the pattern, in particular from a wireless device and/or another network node, and/or determining the pattern based on information pertaining to the wireless device, which may be received from the wireless device and/or be available to the network node, e.g. from the network and/or memory. Such information may comprise e.g. scheduling data and/or required transmissions for a wireless device. Obtaining a pattern may be performed on the same spectrum the pattern pertains to or on a different spectrum.

| Abbreviation | Explanation |
|---|---|
| AP | Access Point |
| BS | Base Station |
| CID | Cell Identity |
| CRS | Cell-specific Reference Signal |
| DAS | Distributed Antenna System |
| DL | Downlink |
| DMRS | Demodulation Reference Signal |
| eICIC | Enhanced Inter-Cell Interference Coordination |
| ICIC | Inter-Cell Interference Coordination |
| ID | Identity |
| L1 | Layer 1 |
| L2 | Layer 2 |
| LBT | Listen Before Talk |
| LTE | Long Term Evolution, a wireless communication standard |
| MAC | Medium Access Control |
| OFDM | Orthogonal Frequency Division Multiplexing |
| PBCH | Physical Broadcast Channel |
| PCFICH | Physical Control format Indicator |
| PDCCH | Physical Downlink Control Channel |
| PDSCH | Physical Downlink Shared Channel |
| PHICH | Physical Hybrid ARQ Indicator Cahnnel |
| PSS | Primary Synchronization Signal |
| RAT | Radio Access Technology |
| RE | Resource Element |
| RB | Resource Block |
| RRH | Remote radio head |
| RRM | Radio Resource Management |
| RRU | Remote radio unit |
| RSRQ | Reference signal received quality |
| RSRP | Reference signal received power |
| SFN | Single Frequency Network |
| SRS | Sounding Reference Signal |
| SSS | Secondary Synchronization Signal |
| TTI | Transmission time intervall |
| UE | User Equipment |
| UL | Uplink |
| RSTD | Reference signal time difference |
| SON | Self Organizing Network |
| RSSI | Received signal strength indicator |
| O&M | Operational and Maintenance |
| OSS | Operational Support Systems |
| OTDOA | Observed time difference of arrival |
| OVSF | Orthogonal Variable Spreading Factor |

These and other abbreviations may be used according to LTE standard definitions.

In this description, for purposes of explanation and not limitation, specific details are set forth (such as particular network functions, processes and signalling steps) in order to provide a thorough understanding of the technique presented herein. It will be apparent to one skilled in the art that the present concepts and aspects may be practiced in other embodiments and variants that depart from these specific details but without departing from the scope of the present invention as it is set forth in the appended independent claims.

For example, the concepts and variants are partially described in the context of Long Term Evolution (LTE) or LTE-Advanced (LTE-A) mobile or wireless communications technologies; however, this does not rule out the use of the present concepts and aspects in connection with additional or alternative mobile communication technologies such as the Global System for Mobile Communications (GSM). While the following embodiments will partially be described with respect to certain Technical Specifications (TSs) of the Third Generation Partnership Project (3GPP), it will be appreciated that the present concepts and aspects could also be realized in connection with different Performance Management (PM) specifications.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP), a Field Programmable Gate Array (FPGA) or general purpose computer. It will also be appreciated that while the embodiments described herein are elucidated in the context of methods and devices, the concepts and aspects presented herein may also be embodied in a program product as well as in a system comprising control circuitry, e.g. a computer processor and a memory coupled to the processor, wherein the memory is encoded with one or more programs or program products that execute the services, functions and steps disclosed herein.

It is believed that the advantages of the aspects and variants presented herein will be fully understood from the foregoing description, and it will be apparent that various changes may be made in the form, constructions and arrangement of the exemplary aspects thereof without departing from the scope of the invention as defined in the appended claims. Because the aspects presented herein can be varied in many ways, it will be recognized that any scope of protection should be defined by the scope of the claims that follow without being limited by the description.

## Claims

1. A method of operating a wireless device in a wireless communication network, wherein the wireless device is a user equipment and/or a mobile terminal, and wherein the wireless device is adapted to transmit data on a second transmission frequency spectrum which is licensed and accessed based on pre-determined communication schedules, each communication schedule pertaining to a scheduling time interval of predetermined length, the method comprising
- dynamically determining (WS10), by the wireless device, a Listen-Before-Talk, LBT, pattern of expected transmission accesses on at least a first transmission frequency spectrum which is unlicensed and accessed with LBT, the pattern covering a plurality of scheduling time intervals and comprising information indicating at which scheduling time intervals the wireless device is expected to perform a transmission access,
wherein determining the pattern of expected transmission is based on one of, or any combination of:
- one or more uplink scheduling grants,
- one or more HARQ retransmission patterns,
- one or more patterns of reference signal transmissions,
- one or more patterns of resources restricted for scheduling data, and
- statistics of one or more patterns of a LBT time interval; and configuring the wireless device according to the pattern.

2. Method according to one of the preceding claims, wherein the pattern is determined based on one or more criteria.

3. A wireless device for a wireless communication network, wherein the wireless device is a user equipment and/or a mobile terminal, the wireless device being adapted to transmit data on a second transmission frequency spectrum which is licensed and accessed based on pre-determined communication schedules, each communication schedule pertaining to a scheduling time interval, the wireless device being further adapted to dynamically determine a Listen-Before-Talk, LBT, pattern of expected transmission accesses on at least a first transmission frequency spectrum which is unlicensed and accessed with LBT, the pattern covering a plurality of scheduling time intervals and comprising information indicating at which scheduling time intervals the wireless device is expected to perform a transmission access
wherein determining the pattern of expected transmission is based on one of, or any combination of:
- one or more uplink scheduling grants,
- one or more HARQ retransmission patterns,
- one or more patterns of reference signal transmissions,
- one or more patterns of resources restricted for scheduling data, and
- statistics of one or more patterns of a LBT time interval; and
configure the wireless device according to the pattern.

4. Computer program product comprising code executable by control circuitry, the code causing the control circuitry to carry out a method according to any of claims 1 and 2 when the code is executed by control circuitry.

5. Storage medium storing a computer program product according to claim 4.

## Patentansprüche

1. Verfahren zum Betreiben einer drahtlosen Vorrichtung in einem drahtlosen Kommunikationsnetz, wobei die drahtlose Vorrichtung eine Benutzereinrichtung und/oder ein mobiles Endgerät ist, und wobei die drahtlose Vorrichtung zur Übertragung von Daten auf einem zweiten Übertragungsfrequenzspektrum angepasst ist, das lizenziert ist und auf das zugegriffen wird basierend auf vorbestimmten Kommunikationsplänen, wobei jeder Kommunikationsplan sich auf einen Planungszeitintervall vorbestimmter Länge bezieht, wobei das Verfahren Folgendes umfasst:
- durch die drahtlose Vorrichtung, dynamisches Bestimmen (WS10), eines Listen-Before-Talk-Musters, LBT-Musters, der erwarteten Übertragungszugriffe auf mindestens einem ersten Übertragungsfrequenzspektrum, das unlizenziert ist und auf das durch LBT zugegriffen wird, wobei das Muster eine Vielzahl von Planungszeitintervallen abdeckt und Informationen umfasst, die angeben, zu welchen Planungszeitintervallen die drahtlose Vorrichtung erwartet wird einen Übertragungszugriff durchzuführen,
wobei das Bestimmen der Muster der erwarteten Übertragung auf einem, oder einer beliebigen Kombination von Folgendem basiert:
- eine oder mehrere Uplink-Planungsgewährleistungen,
- ein oder mehrere HARQ-Neuübertragungsmuster,
- ein oder mehrere Muster von Referenzsignalübertragungen,
- ein oder mehrere Muster von Ressourcen begrenzt zur Planung von Daten, und
- Statistiken eines oder mehrerer Muster eines LBT-Zeitintervalls; und Konfigurieren der drahtlosen Vorrichtung gemäß dem Muster.

2. Verfahren nach einem der vorstehenden Ansprüche, wobei das Muster auf der Grundlage eines oder mehrerer Kriterien ermittelt wird.

3. Drahtlose Vorrichtung für ein drahtloses Kommunikationsnetz, wobei die drahtlose Vorrichtung eine Benutzereinrichtung und/oder ein mobiles Endgerät ist, wobei die drahtlose Vorrichtung zur Übertragung von Daten auf einem zweiten Frequenzspektrum angepasst ist, das lizenziert ist und auf das zugegriffen wird basierend auf vorbestimmten Kommunikationsplänen, wobei jeder Kommunikationsplan sich auf einen Planungszeitintervall bezieht, wobei die drahtlose Vorrichtung ferner dazu angepasst ist, dynamisch ein Listen-Before-Talk-Muster, LBT-Muster, der erwarteten Übertragungszugriffe auf mindestens einem ersten Übertragungsfrequenzspektrum zu bestimmen, das unlizenziert ist und auf das durch LBT zugegriffen wird, wobei das Muster eine Vielzahl von Planungszeitintervallen abdeckt und Informationen umfasst, die angeben, zu welchen Planungszeitintervallen die drahtlose Vorrichtung erwartet wird einen Übertragungszugriff durchzuführen,
wobei das Bestimmen der Muster der erwarteten Übertragung auf einem, oder einer beliebigen Kombination von Folgendem basiert:
- eine oder mehrere Uplink-Planungsgewährleistungen,
- ein oder mehrere HARQ-Neuübertragungsmuster,
- ein oder mehrere Muster von Referenzsignalübertragungen,
- ein oder mehrere Muster von Ressourcen begrenzt zur Planung von Daten, und
- Statistiken eines oder mehrerer Muster eines LBT-Zeitintervalls; und Konfigurieren der drahtlosen Vorrichtung gemäß dem Muster.

4. Computerprogrammprodukt, umfassend Code ausführbar durch eine Steuerschaltung, wobei der Code die Steuerschaltung veranlasst, ein Verfahren nach einem der Ansprüche 1 und 2 durchzuführen, wenn der Code durch die Steuerschaltung ausgeführt wird.

5. Speichermedium, das ein Computerprogrammprodukt nach Anspruch 4 speichert.

## Revendications

1. Procédé de fonctionnement d'un dispositif sans fil dans un réseau de communication sans fil, dans lequel le dispositif sans fil est un équipement utilisateur et/ou un terminal mobile, et dans lequel le dispositif sans fil est conçu pour transmettre des données sur un deuxième spectre de fréquences de transmission qui est sous licence et auquel on accède sur la base de planifications de communication prédéterminées, chaque planification de communication se rapportant à un intervalle de temps de planification de longueur prédéterminée, le procédé comprenant
- la détermination dynamique (WS10), par le dispositif sans fil, d'un motif Écouter avant de parler, LBT, d'accès de transmission attendus sur au moins un premier spectre de fréquences de transmission qui est sans licence et auquel on accède avec LBT, le motif couvrant une pluralité d'intervalles de temps de planification et comprenant des informations indiquant à quels intervalles de temps de planification le dispositif sans fil est censé mettre en oeuvre un accès de transmission,
dans lequel la détermination du motif de la transmission attendue est basée sur l'un parmi, ou n'importe quelle combinaison parmi :
- une ou plusieurs autorisations de planification de liaison montante,
- un ou plusieurs motifs de retransmission HARQ,
- un ou plusieurs motifs de transmissions de signal de référence,
- un ou plusieurs motifs de ressources limitées pour des données de planification, et
- des statistiques d'un ou plusieurs motifs d'un intervalle de temps LBT ; et la configuration du dispositif sans fil selon le motif.

2. Procédé selon l'une des revendications précédentes, dans lequel le motif est déterminé sur la base d'un ou plusieurs critères.

3. Dispositif sans fil pour un réseau de communication sans fil, dans lequel le dispositif sans fil est un équipement utilisateur et/ou un terminal mobile, le dispositif sans fil étant conçu pour transmettre des données sur un deuxième spectre de fréquences de transmission qui est sous licence et auquel on accède sur la base de planifications de communication prédéterminées, chaque planification de communication se rapportant à un intervalle de temps de planification, le dispositif sans fil étant conçu en outre pour déterminer dynamiquement un motif Écouter avant de parler, LBT, d'accès de transmission attendus sur au moins un premier spectre de fréquences de transmission qui est sans licence et auquel on accède avec LBT, le motif couvrant une pluralité d'intervalles de temps de planification et comprenant des informations indiquant à quels intervalles de temps de planification le dispositif sans fil est censé mettre en oeuvre un accès de transmission
dans lequel la détermination du motif de la transmission attendue est basée sur l'un parmi, ou n'importe quelle combinaison parmi :
- une ou plusieurs autorisations de planification de liaison montante,
- un ou plusieurs motifs de retransmission HARQ,
- un ou plusieurs motifs de transmissions de signal de référence,
- un ou plusieurs motifs de ressources limitées pour des données de planification, et
- des statistiques d'un ou plusieurs motifs d'un intervalle de temps LBT ; et configurer le dispositif sans fil selon le motif.

4. Produit programme informatique comprenant un code exécutable par un circuit de commande, le code amenant le circuit de commande à effectuer un procédé selon l'une quelconque des revendications 1 et 2 lorsque le code est exécuté par le circuit de commande.

5. Support de stockage stockant un produit programme informatique selon la revendication 4.
